# EUROPÄISCHE PATENTANMELDUNG

(11) **EP 1 388 675 A1**
(43) Veröffentlichungstag der Anmeldung: **11.02.2004**
(21) Anmeldenummer: 03001842.8
(22) Anmeldetag: 29.01.2003
(51) Int. Cl.: F16B 13/08

(54) **Formschlüssig setzbarer Dübel**

(30) Priorität: 08.08.2002 DE 20212209 U
(71) Anmelder: Liebig GmbH & Co. KG., 64319 Pfungstadt (DE)
(72) Erfinder: Wendt, Andreas, 61194 Niddatal (DE)
(74) Vertreter: Helber, Friedrich G., Dipl.-Ing.

(57) **Zusammenfassung**

Die Erfindung betrifft einen in einer mit einer radial umlaufenden Hinterschnittfläche (17) versehenen Bohrung (12) formschlüssig setzbaren Dübel (10), welcher zur Verriegelung in der Bohrung mit auf einem am bohrungsinneren Ende eines Schafts angeordneten Kopfstück verschwenkbar abgestützten Riegelelementen (22a;22b;22c) versehen ist.

An den ins Bohrungsinnere weisenden Enden der Riegelelemente und/oder der diesen zugewandten Abstützfläche des Kopfstücks (20) sind den Widerstand gegen Gleiten der Riegelelemente auf der Abstützfläche in Umfangsrichtung erhöhende Mittel vorgesehen.

Diese Mittel können von in ihrer Oberflächen-Rauigkeit erhöhten Bereiche der aufeinander abgestützten Flächen an den Enden der Riegelelemente (22a;22b;22c) und/oder der zugewandten Abstützfläche des Kopfstücks (20), von Riffelungen oder Riefungen oder auch von einer gesonderten scheiben- oder ringförmigen Drehsicherung gebildet sein.

## Beschreibung

Die Erfindung betrifft einen in einer mit einer radial umlaufenden Hinterschnittfläche versehenen Bohrung formschlüssig setzbarer Dübel, mit einem dem Durchmesser der Bohrung im Wesentlichen entsprechenden und in die Bohrung einführbaren Dübelkörper in Form eines am bohrungsinneren Ende eines an seinem äußeren Ende mit einem Schraubenkopf oder einer aufgeschraubten Mutter versehenen, langgestreckten Befestigungsbolzens angeordneten Kopfstücks relativ geringer Höhe, auf dem die bohrungsinneren vorderen Enden von zu einer den Befestigungsbolzen umschließenden dickwandigen zylindrischen Hülse zusammengeschlossenen Riegelelementen aufsitzen, deren zur Bohrungsmündung weisende rückwärtige Enden von einer innerhalb des Durchmessers der Bohrung liegenden Lage in eine Lage verschwenkbar sind, in welcher sie zumindest teilweise über den Durchmesser des Dübelkörpers vorstehen und die Hinterschnittfläche der Bohrung verriegelnd hintergreifen, und mit einem zwischen die zur Bohrungsmündung weisenden Enden der Riegelelemente eingreifenden, sich zum Bohrungsinnern konisch verjüngenden Bauteil, der bei einer Verschiebung des Kopfstücks in Richtung zur Bohrungsmündung die rückwärtigen Enden der Riegelelemente zwangsläufig nach außen verschwenkt, wobei zwischen dem längsverschieblich auf dem Befestigungsbolzen angeordneten, sich konisch verjüngenden Bauteil und dem Schraubenkopf bzw. der Mutter wenigstens eine in Bolzen-Längsrichtung verschiebliche Hülse und eine durch axiale Zusammendrückung unter Vorspannung setzbare Schraubenfeder angeordnet ist, deren Vorspannung durch ein auf dem zur Bohrungsmündung weisenden Endbereich der Riegelelemente angeordnetes ringförmiges Spannelement mit einem bohrungsmündungsseitig über das Durchmessermaß der zugehörigen Bohrung vortretenden Abschnitt fixiert ist.

Ein derartiger Dübel ist zum Beispiels aus der EP 0 076 277 B1 bekannt. In der Praxis haben sich diese formschlüssigen, in einer entsprechend ausgebildeten Hinterschnitt-Bohrung befestigbaren Dübel für schwierige Anwendungsfälle erfolgreich eingeführt. Solche schwierigen Fälle liegen beispielsweise darin vor, wenn eine in einem Betonuntergrund eingebrachte Bohrung nicht durch vom Dübel auf die Bohrungswandung ausgeübte Radialkräfte beansprucht werden darf, weil die Bohrung beispielsweise nahe dem Rand einer Betonplatte angeordnet ist und das Material der Betonplatte bei radialen Kräften zum Rand hin aufbrechen könnte.

In der Praxis hat sich nun gezeigt, dass in vereinzelten Fällen beim Befestigen eines Werkstücks auf einem Untergrund mittels der bekannten Dübel durch Anziehen des am äußeren Ende des Befestigungsbolzens vorgesehenen Schraubenkopf bzw. einer dort vorgesehenen Mutter die in den Hinterschnitt aufgeschwenkten Riegelelemente an ihrem zur Bohrungsmündung weisenden rückwärtigen Ende sich an der rauen Hinterschnittfläche verkrallen, während zwischen den vorderen bohrungsinneren Enden der Riegelelemente und der diesen zugewandten Abstützfläche am Kopfstück nur eine vergleichsweise geringe Reibungskraft entsteht, die in Ausnahmefällen geringer als die zwischen dem Gewinde des Befestigungsbolzens und dem Kopfstück übertragbare Kraft sein kann. Dann schraubt sich das Gewinde des Befestigungsbolzens beim Drehen des Schraubenkopfs nicht in das Kopfstück hinein, sondern dieses dreht unter den zugewandten Enden der Riegelelemente durch, so dass dann keine hinreichende Befestigungskraft für das Werkstück erzielt werden kann.

Bei älteren, formschlüssig befestigbaren Dübeln der hier in Frage stehenden Art (EP 0 002 651 B1; DE 27 30 618 A1) waren zwar bereits Vorkehrungen zur Verhinderung des Durchdrehens des Kopfstücks unter den Riegelelementen getroffen, die darin bestanden, dass von den Enden der Riegelelemente jeweils wenigstens ein Vorsprung in entsprechende Aussparungen im Kopfstück eingreifen. Dadurch wurde eine formschlüssige Drehsicherung zwischen dem Kopfstück und den Riegelelementen verwirklicht. In der Praxis wurde dann aber auf solche formschlüssigen Drehsicherungen verzichtet, weil der Herstellungsaufwand sowohl für die mit den Vorsprüngen versehenen Riegelelemente als auch für die mit den zugeordneten Aussparungen versehenen Kopfstücke erheblich war.

Der Erfindung liegt demgegenüber die Aufgabe zugrunde, einen formschlüssig setzbaren Dübel der hier in Frage stehenden Art zu schaffen, bei welchem das Verdrehen der vorderen Enden der Riegelelemente auf der Abstützfläche des Kopfstücks in jedem Fall vermieden ist, ohne dass hierzu in der Herstellung arbeits- und kostenaufwändige, in formschlüssigen Eingriff bringbare Ansätze oder Aussparungen an den Riegelelementen bzw. dem Kopfstück vorgesehen werden müssen.

Ausgehend von einem Dübel der eingangs erwähnten Art wird diese Aufgabe erfindungsgemäß dadurch gelöst, dass an den vorderen Enden der Riegelelemente und/oder der diesen zugewandten Abstützfläche des Kopfstücks den Widerstand gegen Gleiten der Riegelelemente auf der Abstützfläche in Umfangsrichtung erhöhende Mittel vorgesehen sind.

Dabei ist die Ausgestaltung dann mit Vorteil so getroffen, dass die Widerstand gegen Gleiten erhöhenden Mittel von in ihrer Oberflächen-Rauhigkeit erhöhten Bereichen der aufeinander abgestützten Flächen an den vorderen Enden der Riegelelemente und/oder der diesen zugewandten Abstützfläche des Kopfstücks gebildet sind.

Die einander zugewandten aufgerauten Bereiche der vorderen Enden der Riegelelemente und/oder der diesem zugewandten Abstützfläche können durch Ausbildung von Riffelungen oder Riefungen erzeugt sein, welche die Reibung zwischen dem Kopfstück und den Riegelelementen in der gewünschten Weise erhöhen.

Alternativ können die den Widerstand gegen radiales Gleiten erhöhenden Mittel auch an einer zwischen den vorderen Enden der Riegelelementen und der dieser zugewandten Stützfläche des Kopfstücks angeordnete scheiben- oder ringförmigen Drehsicherung ausgebildet sein. Diese Drehsicherung kann beispielsweise aus einem Material bestehen, welches zumindest an den vorderen Enden der Riegelelemente und der diesen zugewandten Abstützfläche des Kopfstücks liegenden Bereichen einen hohen Reibungskoeffizenten aufweist. So kommen beispielsweise Scheiben aus zumindest bereichsweise von einem elastomeren oder gummielastischem Material gebildeten Material in Frage.

Alternativ kann die ring- oder scheibenförmige Drehsicherung auch von zumindest in den in den vorderen Enden der Riegelelemente und der dieser gegenüberliegenden Abstützfläche des Kopfstücks anliegenden Bereich durch Riffelung, Riefungen oder in anderer Weise aufgerauht sein.

Die ring- oder scheibenförmigen Drehsicherungen können durch Beschichtung der Oberfläche oder durch formgebende Verfahren geometrisch verformt bzw. aufgerauht sein. Bei Verwendung von federelastischem Metall für die Drehsicherung können hier - gegebenenfalls - also auch Drehsicherungen nach Art von Zahnscheiben, Fächerscheiben, Sicherungsscheiben etc. in Frage kommen, wie sie auch zur Sicherung von Muttern oder Schrauben gegen ungewolltes Lösen Verwendung finden.

Alternativ ist auch eine Ausgestaltung möglich, bei welcher bei einem Dübel der eingangs erwähnten Art die von den zur dickwandigen zylindrischen Hülse zusammengeschlossenen vorderen Enden der Riegelelemente gebildete Stirnfläche und die dieser gegenüberliegende Abstützfläche des Kopfstücks in Umfangsrichtung im Wesentlichen komplementär gewellt ausgebildet sind, wobei die Anordnung so getroffen ist, dass die Wellenberge der von den Riegelelementen gebildeten Stirnfläche zu den Wellentälern der Abstützfläche ausgerichtet sind. Bei einem beginnenden Durchdrehen der Riegelelemente auf der Abstützfläche versuchen die Wellenberge auf den Flanken der Wellenberge der gegenüberliegenden Fläche aufzugleiten, wodurch in den Berührungspunkten zusätzlich Kräfte entstehen, die sowohl in axialer Richtung als auch eine in Umfangsrichtung weisende Komponenten aufweisen und dadurch die von den Riegelelementen auf das Kopfstück übertragenden Haltekräfte beim Drehen des Schraubenkopfs des Befestigungsbolzens erhöhen und so sicherstellen, dass sich das Gewinde des Befestigungsbolzens ins Kopfstück hineinschraubt, d.h. die Abstützfläche des Kopfstücks sich nicht unter den auf ihr abgestützten Enden der Riegelelemente durchdrehen kann.

Die Erfindung ist in der folgenden Beschreibung von Ausführungsbeispielen in Verbindung mit der Zeichnung näher erläutert, und zwar zeigt:
- Fig. 1: eine Schnittansicht durch einen Wandabschnitt mit einer Hinterschnitt-Bohrung mit einem teilweise im Längsmittelschnitt dargestellten erfindungsgemäßen Dübel in noch unverriegeltem Zustand unmittelbar bevor dessen Riegelelemente durch Spannung der Feder in die Eingriffsstellung mit der Hinterschnittfläche ausgeschwenkt werden, wobei die Verriegelungsstellung der Riegelelemente strichpunktiert angedeutet ist;
- Fig. 2: eine Schnittansicht durch den Dübel gesehen in Richtung der Pfeile 2-2 in Fig. 1;
- Fig. 3: eine Ansicht auf das Kopfstück des in den Figuren 1 und 2 gezeigten Dübels gesehen in Richtung der Pfeile 3-3 in Fig. 1;
- Fig. 3a: eine Teil-Schnittansicht durch das Kopfstück gesehen in Richtung der Pfeile 3a-3a in Fig. 3;
- Fig. 4: eine Unteransicht auf die Riegelelemente des Dübels gemäß den Figuren 1 und 2 gesehen in Richtung der Pfeile 4-4 in Fig. 1;
- Fig. 5: eine Draufsicht auf eine scheibenförmige, zwischen der Abstützfläche des Kopfstücks und den auf dieser abgestützten Enden der Riegelelemente anbringbare gesonderte scheibenförmige Drehsicherung;
- Fig. 6: eine Schnittansicht durch die Drehsicherung gesehen in Richtung der Pfeile 6-6 in Fig. 5;
- Fig. 7: eine perspektivisch auseinandergezogene Ansicht eines abgewandelten Kopfstücks mit zugeordneten Riegelelementen;
- Fig. 8: eine Draufsicht auf das in Fig. 7 dargestellte Kopfstück; und
- Fig. 9: eine Schnittansicht durch das Kopfstück gesehen in Richtung der Pfeile 9-9 in Fig. 8 mit einem der auf ihm abgestützten Riegelelemente.

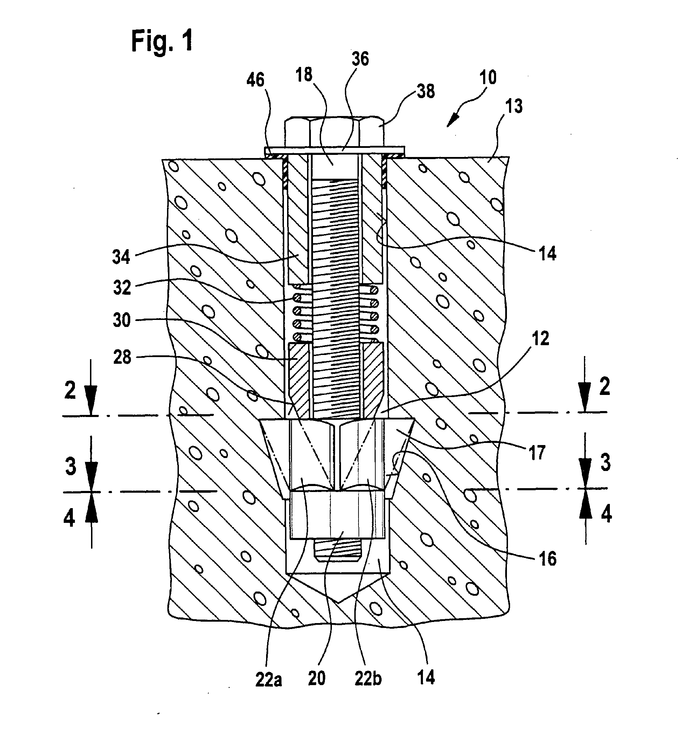

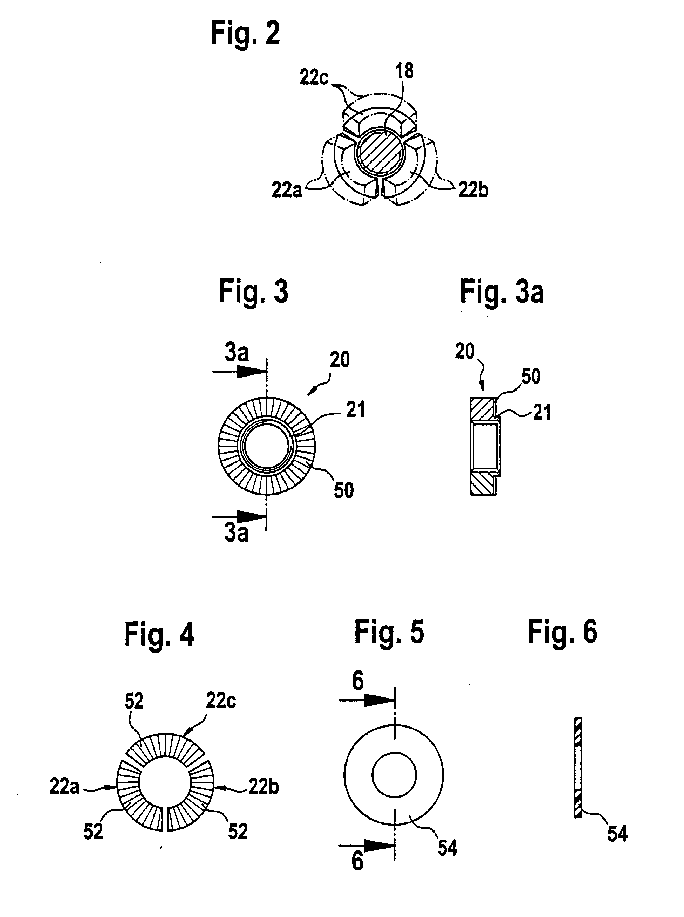

Der in Fig. 1 und - teilweise - in Fig. 2 gezeigte, in seiner Gesamtheit mit 10 bezeichnete erfindungsgemäße Dübel soll formschlüssig in einer Bohrung in einem Untergrund 13, z.B. einer Betonwand, gesetzt - d.h. verriegelt - werden, die sich aus einer zylindrischen Vorbohrung 14 und einer mit Abstand von der Mündung der Bohrung vorgesehenen Erweiterungsbohrung 16 mit einer rückwärts zur Bohrungsmündung gewandten Hinterschnittfläche 17 zusammensetzt. Der Dübel weist einen langgestreckten, im gezeigten Fall ein durchgehendes Gewinde tragenden Befestigungsbolzen 18 auf, auf dessen bohrunginnerem Ende ein im Durchmesser nur geringfügig kleiner als der Durchmesser der Vorbohrung 14 bemessenes Kopfstück 20 aufgeschraubt ist. Der Befestigungsbolzen 18 ist also durch Drehen in das Kopfstück hinein- und aus ihm herausschraubbar. Auf der rückwärts, d.h. zur Bohrungsmündung gewandten Stirn- bzw. Abstützfläche des Kopfstücks sind 3 Riegelelemente 22a, 22b und 22c in gleichmäßigem Winkelabstand um den Befestigungsbolzen 18 herum verteilt abgestützt, die zusammengenommen die Form einer dickwandigen Hülse haben, die aber durch drei in Längsrichtung verlaufende Axialschnitte in die drei Riegelelemente 22a, 22b, 22c unterteilt ist.

Die Riegelelemente sind in ihrer Dicke so bemessen, dass die in der Einführlage gebildete Hülse einen etwas kleineren Durchmesser als die Bohrung 14 hat, d.h. ihr Durchmesser entspricht etwa dem Durchmesser des Kopfstücks 20. Im Anschluss an die Riegelelemente 22 ist ein sich zum Bohrungsinnern hin konisch verjüngender und mit dem verjüngten Ende 28 zwischen die Riegelelemente greifender hülsenförmiger Bauteil 30 längsverschieblich auf dem Befestigungsbolzen angeordnet. Auf der rückwärtigen Stirnfläche des Bauteils 30 ist eine durch axiale Zusammendrückung vorgespannte Schraubenfeder 32 angeordnet, deren bohrungsmündungsseitiges Ende an der bohrungsinneren Stirnfläche einer wiederum längsverschieblich auf dem Befestigungsbolzen 18 angeordneten weiteren Hülse 34 abgestützt ist. Das äußere Ende der Hülse 34 wird über eine zwischengelegte Unterlegscheibe 36 an der Unterseite eines am äußeren Ende des Befestigungsbolzens vorgesehenen Schraubenkopfs 38 abgestützt. Die zwischen dem Schraubenkopf 38 und der Hülse 34 vorgesehene Unterlegscheibe 36 überträgt die beim Anziehen des Schraubenkopfs 38 nach der Verriegelung der Riegelelemente 22a, 22b, 22c an der Hinterschnittfläche 17 erzeugte Einspannkraft auf die Oberfläche eines zu befestigenden Werkstücks.

Das Aufschwenken der Riegelelemente 22a, 22b und 22c, in die - in Fig. 1 und 2 strichpunktiert angedeutete - Verriegelungsstellung durch den unter Vorspannung der Feder 32 zwischen die Riegelelemente gedrängte verjüngten Abschnitt 28 des Bauteils 30 wird bei nicht in eine Hinterschnitt-Bohrung eingeführten Dübel durch ein Spannelement 46 in Form einer Kunststoffhülse mit am oberen Ende vorgesehenem radialem Flansch verhindert, die bei der Montage des Dübels 10 über die mündungsseitigen Enden der eingeschwenkten Riegelelemente aufgeschoben ist. Beim Einführen des Dübels 10 in die Bohrung 12 setzt sich der Ringflansch des Spannelements 46 auf der Oberseite des zu befestigenden Werkstücks auf und das Spannelement wird bei weiterem axialen Einschieben des Dübels abgestreift, so dass die Riegelelemente bei weiterem axialen Einschieben des Dübels nach Überfahren der Schnittfläche 17 mit ihrem rückwärtigen Ende durch die in Axialrichtung einwirkende Vorspannkraft der Feder 32 vom Bauteil 30 automatisch in die Verriegelungslage aufgeschwenkt werden.

Im bisher beschriebenen Umfang entspricht der Dübel 10 den bekannten formschlüssig setzbaren Dübeln der hier in Frage stehenden Art.

In den Figuren 3 und 4 ist eine erste Möglichkeit veranschaulicht, wie das Verdrehen des Kopfstücks 20 relativ zu den mit ihren rückwärtigen Enden an der Hinterschnittfläche 17 verkrallten Riegelelementen 22a, 22b und 22c verhindert werden kann, auch wenn der Gewindeeingriff zwischen dem Gewinde des Befestigungsbolzens 18 und dem im Kopfstück 20 vorgesehenen Gegengewinde sehr stramm gepasst ist oder sich aufgrund von Korrosion bzw. ins Gewinde eingedrungenem Bohrnebel erhöht hat, oder wenn beim Montagevorgang des Dübels 10 zwischen den Gewindegängen des Befestigungsbolzens und der Gewindebohrung im Kopfstück eine hohe Vorspannung erzeugt und dadurch die Reibung erhöht worden ist. Zu diesem Zweck ist die Abstützfläche des Kopfstücks 20 in der in Figur 3 schematisch angedeuteten Weise durch eine Vielzahl von radial verlaufenden Riefen 50 aufgeraut und entsprechende Riefen 52 sind an dem ins Bohrungsinnere weisenden vorderen, auf der mit den Riefen 50 versehenen Abstützfläche des Kopfstücks aufgedrückten Endfläche der Riegelelemente 22a, 22b, 22c vorgesehen (Figur 4). Der Verdrehwiderstand zwischen der Abstützfläche und den Riegelelementen wird dadurch in jedem Falle so weit erhöht, dass er den zum Verschrauben des Befestigungsbolzens 18 in der Gewindebohrung des Kopfstücks 20 erforderlichen Drehwiderstand übersteigt. Anstelle der gezeigten Radialriefen können auch andere, den Drehwiderstand erhöhende Aufrauungen, wie Rändelung etc. vorgesehen werden. Um zu verhindern, dass beim Ausschwenken der Riegelelemente 22a, 22b, 22c die auf der Abstützfläche des Kopfstücks 20 aufsitzenden Stirnflächen der Riegelelemente sich radial nach innen verschieben und dabei das Gewinde des Befestigungsbolzens 18 verformen können, weist das Kopfstück 20 im Bereich seiner Gewindebohrung einen in Fig. 3a dargestellten, rückwärts zur Bohrungsmündung weisenden und über die Abstützfläche vortretenden integralen Ringvorsprung 21 auf.

In den Figuren 5 und 6 ist eine scheibenförmige Drehsicherung 54 gezeigt, welche zwischen der Abstützfläche des Kopfstücks 20 und den bohrungsinneren vorderen Enden der Riegelelemente 22a, 22b, 22c montiert werden kann. Im gezeigten Fall ist diese Drehsicherung 54 aus einem elastomeren Kunststoffmaterial hergestellt, welches auch im Zusammenwirken mit der Abstützfläche des Kopfstücks 20 bzw den Enden der Riegelelemente 22a, 22b, 22c infolge des hohen Reibungskoeffizienten des verwendeten Kunststoffmaterials eine Drehsicherung bildet, auch wenn die Abstützfläche des Kopfstücks und/oder die zugeordneten Endflächen der Riegelelemente nicht gesondert aufgeraut sind.

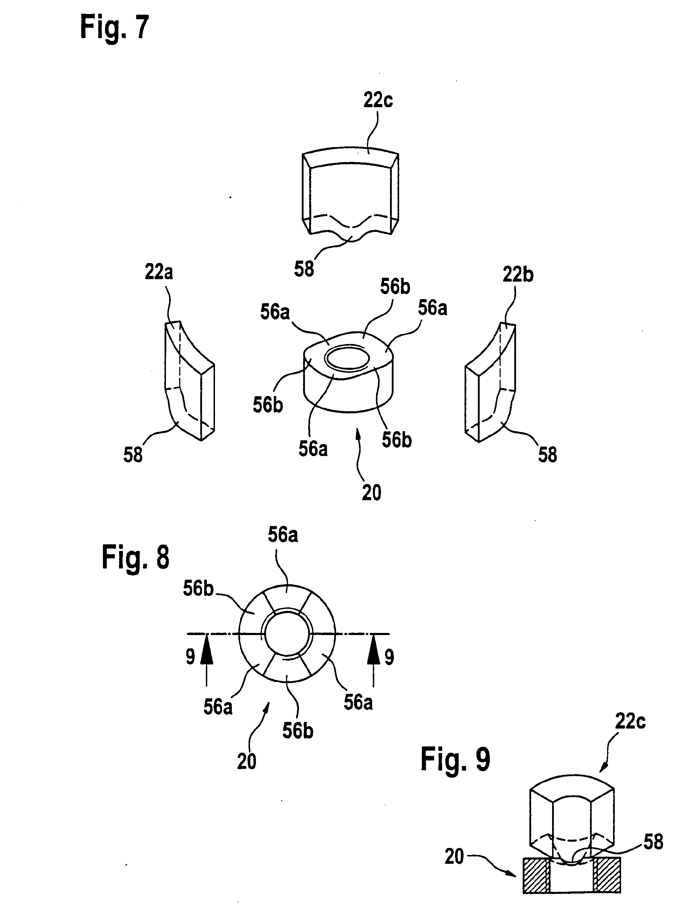

In den Figuren 7 bis 9 ist schließlich noch eine Möglichkeit der Abstützung der Riegelelemente 22a, 22b, 22c auf der zugeordneten Abstützfläche des Kopfstücks 20 veranschaulicht, welche ebenfalls die gewünschte Verdrehsicherung zwischen dem Kopfstück und den Riegelelementen gewährleistet. Zu diesem Zweck sind die Abstützfläche des Kopfstücks 20 ebenso wie die von den vorderen Enden der Riegelelemente insgesamt gebildete Stirnfläche dieser Riegelelemente komplementär gewellt ausgebildet. Im speziellen Fall weist das Kopfstück also in Umfangsrichtung insgesamt drei Wellentäler 56a mit dazwischenliegenden Wellenbergen 56b auf und jedes Riegelelement ist an seinem unteren Ende mit einem zu den Wellentälern 56a komplementären Wellenberg 58 versehen. Beim fertig montierten Dübel greifen die Wellenberge 58 der Riegelelemente in die Wellentäler 56a des Kopfstücks 20 ein. Ein Durchdrehen der Riegelelemente auf der Abstützfläche wird bei dieser Ausgestaltung dadurch verhindert, dass bei beginnendem Durchdrehen die Wellenberge jeweils auf den Flanken der Wellenberge der gegenüberliegenden Fläche aufzugleiten suchen, wodurch Kräfte entstehen, die nicht nur in Axialrichtung wirken und somit die Spannfeder 32 zusätzlich zusammenzudrücken suchen, sondern auch Kräftekomponenten in Umfangsrichtung, welche den Verdrehwiderstand erhöhen.

Es ist ersichtlich, dass im Rahmen des Erfindungsgedankens Abwandlungen und Weiterbildungen der vorstehend beschriebenen und in den Zeichnungen dargestellten Möglichkeiten der Ausgestaltung der Verdrehsicherung zwischen dem Kopfstück und den Riegelelementen verwirklichbar sind. So können beispielsweise anstelle der in Verbindung mit den Figuren 5 und 6 beschriebenen scheibenförmigen Drehsicherung aus elastomerem Kunststoff auch solche Drehsicherungen aus Metall, beispielsweise nach Art der zur Sicherung von Muttern verwendeten Zahnscheiben, Fächerscheiben, Sicherungsscheiben usw. in Frage kommen. Es ist weiter ersichtlich, dass die beschriebenen Möglichkeiten auch kombiniert werden können. So kann beispielsweise die Aufrauung der Abstützfläche des Kopfstücks 20 und/oder der zugeordneten Endfläche der Riegelelemente 22a, 22b, 22c kombiniert werden mit einer zusätzlichen scheibenförmigen Drehsicherung entsprechend den Figuren 5 und 6. Das Gleiche gilt auch für die Kombination der Lösungsmöglichkeiten nach den Figuren 7 bis 9 und den Figuren 3 und 4 oder 5 und 6.

## Patentansprüche

1. In einer mit einer radial umlaufenden Hinterschnittfläche (17) versehenen Bohrung (12) formschlüssig setzbarer Dübel (10), mit einem dem Durchmesser der Bohrung im Wesentlichen entsprechenden und in die Bohrung einführbaren Dübelkörper in Form eines am bohrungsinneren Ende eines an seinem äußeren Ende mit einem Schraubenkopf (38) oder einer aufgeschraubten Mutter versehenen, langgestreckten Befestigungsbolzens (18) angeordneten Kopfstücks (20) relativ geringer Höhe, auf dem die bohrungsinneren vorderen Enden von zu einer den Befestigungsbolzen umschließenden dickwandigen zylindrischen Hülse zusammengeschlossenen Riegelelementen (22a; 22b; 22c) aufsitzen, deren zur Bohrungsmündung weisende rückwärtige Enden von einer innerhalb des Durchmessers der Bohrung (12) liegenden Lage in eine Lage verschwenkbar sind, in welcher sie zumindest teilweise über den Durchmesser des Dübelkörpers vorstehen und die Hinterschnittfläche (17) der Bohrung verriegelnd hintergreifen, und mit einem zwischen die zur Bohrungsmündung weisenden Enden der Riegelelemente (22a; 22b; 22c) eingreifenden, sich zum Bohrungsinnern konisch verjüngenden Bauteil (30), der bei einer Verschiebung des Kopfstücks (20) in Richtung zur Bohrungsmündung die rückwärtigen Enden der Riegelelemente (22a; 22b; 22c) zwangsläufig nach außen verschwenkt, wobei zwischen dem längsverschieblich auf dem Befestigungsbolzen (18) angeordneten, sich konisch verjüngenden Bauteil (30) und dem Schraubenkopf (38) bzw. der Mutter wenigstens eine in Bolzen-Längsrichtung verschiebliche Hülse (34) und eine durch axiale Zusammendrückung unter Vorspannung setzbare Schraubenfeder (32) angeordnet ist, deren Vorspannung durch ein auf dem zur Bohrungsmündung weisenden Endbereich der Riegelelemente (22a; 22b; 22c) angeordnetes ringförmiges Spannelement (46) mit einem bohrungsmündungsseitig über das Durchmessermaß der zugehörigen Bohrung vortretenden Abschnitt fixiert ist,
**dadurch gekennzeichnet,**
**dass** an den vorderen Enden der Riegelelemente (22a; 22b; 22c) und/oder der diesen zugewandten Abstützfläche des Kopfstücks (20) den Widerstand gegen Gleiten der Riegelelemente auf der Abstützfläche in Umfangsrichtung erhöhende Mittel vorgesehen sind.

2. Dübel nach Anspruch 1, **dadurch gekennzeichnet, dass** die den Widerstand gegen Gleiten erhöhenden Mittel von in ihrer Oberflächen-Rauigkeit erhöhten Bereichen der aufeinander abgestützten Flächen an den vordem Enden der Riegelelemente (22a; 22b; 22c) und/oder der diesen zugewandten Abstützfläche des Kopfstücks (30) gebildet sind.

3. Dübel nach Anspruch 2, **dadurch gekennzeichnet, dass** die einander zugewandten aufgerauhten Bereiche der vorderen Enden der Riegelelemente (22a; 22b; 22c) und/oder der diesen zugewandten Abstützfläche des Kopfstücks (30) durch Ausbildung von Riffelungen oder Riefungen (52; 50) erzeugt sind.

4. Dübel nach einem der Ansprüche 1 bis 3, **dadurch gekennzeichnet, dass** die den Widerstand gegen radiales Gleiten erhöhende Mittel an einer zwischen den vorderen Enden der Riegelelemente (22a; 22b 22c) und der dieser zugewandten Abstützfläche des Kopfstücks (20) angeordneten scheiben- oder ringförmigen Drehsicherung (54) ausgebildet sind.

5. Dübel nach Anspruch 4, **dadurch gekennzeichnet, dass** die ring- oder scheibenförmige Drehsicherung (54) aus einem Material besteht, welches zumindest in an den vorderen Enden der Riegelelemente (22a, 22b; 22c) und der diesen zugewandten Abstützflächen des Kopfstücks (20) liegenden Bereichen einen hohen Reibungskoeffizienten aufweist.

6. Dübel nach Anspruch 5, **dadurch gekennzeichnet, dass** die Drehsicherung (54) zumindest bereichsweise von einem elastomeren oder gummielastischen Material gebildet wird.

7. Dübel nach Anspruch 5, **dadurch gekennzeichnet, dass** die ring- oder scheibenförmige Drehsicherung (54) zumindest in den an den vorderen Enden der Riegelelemente (22a; 22b; 22c) und der diesen gegenüberliegenden Abstützfläche des Kopfstücks (20) anliegenden Bereichen durch Riffelung, Riefungen oder in anderer Weise aufgerauht sind.

8. Dübel nach Anspruch 6, **dadurch gekennzeichnet, dass** die ring- oder scheibenförmige Drehsicherung (54) aus federelastischem Metall hergestellt und mit zur Ring- oder Scheibenfläche vortretenden scharfkantigen Vorsprüngen versehen ist.

9. In einer mit einer radial umlaufenden Hinterschnittfläche (17) versehenen Bohrung (12) formschlüssig setzbarer Dübel (10), mit einem dem Durchmesser der Bohrung im Wesentlichen entsprechenden und in die Bohrung einführbaren Dübelkörper in Form eines am bohrungsinneren Ende eines an seinem äußeren Ende mit einem Schraubenkopf (38) oder einer aufgeschraubten Mutter versehenen, langgestreckten Befestigungsbolzens (18) angeordneten Kopfstücks (20) relativ geringer Höhe, auf dem die bohrungsinneren vorderen Enden von zu einer den Befestigungsbolzen umschließenden dickwandigen zylindrischen Hülse zusammengeschlossenen Riegelelementen (22a 22b; 22c) aufsitzen, deren zur Bohrungsmündung weisende rückwärtige Enden von einer innerhalb des Durchmessers der Bohrung (12) liegenden Lage in eine Lage verschwenkbar sind, in welcher sie zumindest teilweise über den Durchmesser des Dübelkörpers vorstehen und die Hinterschnittfläche der Bohrung verriegelnd hintergreifen, und mit einem zwischen die zur Bohrungsmündung weisenden Enden der Riegelelemente (22a; 22b; 22c) eingreifenden, sich zum Bohrungsinnern konisch verjüngenden Bauteil (30), der bei einer Verschiebung des Kopfstücks (20) in Richtung zur Bohrungsmündung die rückwärtigen Enden der Riegelelemente (22a; 22b; 22c) zwangsläufig nach außen verschwenkt, wobei zwischen dem längsverschieblich auf dem Befestigungsbolzen (18) angeordneten, sich konisch verjüngenden Bauteil (30) und dem Schraubenkopf (38) bzw. der Mutter wenigstens eine in Bolzen-Längsrichtung verschiebliche Hülse (34) und eine durch axiale Zusammendrückung unter Vorspannung setzbare Schraubenfeder (32) angeordnet ist, deren Vorspannung durch ein auf dem zur Bohrungsmündung weisenden Endbereich der Riegelelemente (22a; 22b; 22c) angeordnetes ringförmiges Spannelement (46) mit einem bohrungsmündungsseitig über das Durchmessermaß der zugehörigen Bohrung vortretenden Abschnitt fixiert ist,
**dadurch gekennzeichnet,**
**dass** die von den zur dickwandigen zylindrischen Hülse zusammengeschlossenen vorderen Enden der Riegelelemente (22a, 22b; 22c) gebildete Stirnfläche und die dieser gegenüberliegende Abstützfläche des Kopfstücks (20) in Umfangsrichtung im Wesentlichen komplementär gewellt ausgebildet sind, wobei die Anordnung so getroffen ist, dass die Wellenberge (58) der von den Riegelelementen gebildeten Stirnfläche zu den Wellentälern (56a) der Abstützfläche ausgerichtet sind.
